(19) Europäisches Patentamt / European Patent Office / Office européen des brevets

(11) **EP 1 795 816 A1**

(12) **EUROPEAN PATENT APPLICATION**
published in accordance with Art. 158(3) EPC

(43) Date of publication:
**13.06.2007 Bulletin 2007/24**

(51) Int Cl.:
*F24D 11/00* (2006.01)   *F24D 15/02* (2006.01)

(21) Application number: **05766465.8**

(22) Date of filing: **11.07.2005**

(86) International application number:
**PCT/JP2005/013208**

(87) International publication number:
**WO 2006/022097 (02.03.2006 Gazette 2006/09)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.08.2004 JP 2004247716**

(71) Applicant: **Fukuda, Tetsuzo**
**1-chome, Chikusa-ku, Nagoya-shi**
**Aichi 4640806 (JP)**

(72) Inventor: **Fukuda, Tetsuzo**
**1-chome, Chikusa-ku, Nagoya-shi**
**Aichi 4640806 (JP)**

(74) Representative: **Tothill, John Paul**
**Frank B. Dehn & Co.**
**St Bride's House**
**10 Salisbury Square**
**London EC4Y 8JD (GB)**

(54) **FLOOR-HEATING BUILDING**

(57)    The floor heating construction YK of the invention utilizes heat accumulated in soil D as the heat source for floor heating. The floor heating construction YK has a soil heat storage system 10.0 installed in its foundation. The soil heat storage system 100 has multiple electric resistance heating panels 102 placed on the surface of the soil D. The gross heating value of the multiple electric resistance heating panels 102 included in the soil heat storage system 100 is set according to a distance 't' between a building floor 150 and a surface layer of the soil heat storage system 100, such that a greater value is set to the gross heating value against a wider distance 't'. This arrangement attains the further improvement in floor heating with heat accumulated in soil as its heat source.

Fig.2

**Description**

Technical Field

The present invention relates to a floor heating construction and more specifically pertains to a floor heating construction that uses heat accumulated in soil as the heat source for floor heating.

Background Art

There is one innovative technique of floor heating as disclosed in Japanese Patent No. 3049536.

Disclosure of the Invention

The floor heating technique disclosed in this cited reference adopts a significantly different heat source from the conventional heat source for floor heating. This innovative floor heating technique utilizes heat accumulated in soil as the heat source. Because of its novelty and innovativeness, however, there is still room for improvement.

There is accordingly a need for attaining further improvement in floor heating with heat accumulated in soil as its heat source.

A first floor heating construction of the invention using heat accumulated in soil as a heat source for floor heating is equipped with a soil heat storage system that includes multiple heating bodies placed on surface of the soil to accumulate heat in the soil. A gross heating value of the multiple heating bodies included in the soil heat storage system is set according to a distance between a building floor and a surface layer of the soil heat storage system, in such a manner that a greater value is set to the gross heating value corresponding to a wider distance.

The distance between the building floor and the surface layer of the soil heat storage system affects the radiation of the heat accumulated in the soil to the building floor. The first floor heating construction of the invention sets the gross heating value of the multiple heating bodies included in the soil heat storage system by taking into account the distance. This arrangement desirably enhances the efficiency of floor heating in the floor heating construction using heat accumulated in the soil as its heat source. The enhanced efficiency of floor heating naturally attains the significant cost reduction.

In one aspect of the first floor heating construction of the invention, the gross heating value of the multiple heating bodies is set in a range of 160 to 200 W/m$^2$ corresponding to the distance in a range of 0 to 300 mm. This range prevents both a significant insufficiency and a significant excess of the heating value as the heat source for floor heating. This range may be slightly widened to allow a certain extent of insufficiency or excess as the heat source for floor heating.

A second floor heating construction of the invention using heat accumulated in soil as a heat source for floor heating has: a soil heat storage system that includes multiple heating bodies placed on surface of the soil to accumulate heat in the soil; and a control module that controls midnight power-based electricity supply to the multiple heating bodies included in the soil heat storage system. A gross heating value of the multiple heating bodies included in the soil heat storage system is set according to a contract power time based on a contract of midnight power supply, in such a manner that a greater value is set to the gross heating value corresponding to a shorter contract power time.

The state of electricity supply to the multiple heating bodies defines the gross heating value of the multiple heating bodies. The gross heating value affects the state of heat accumulation in the soil. When midnight power is used for the electricity supply to the heating bodies, the power supply time is the contract power time based on the contract of midnight power supply. The second floor heating construction of the invention sets the gross heating value of the multiple heating bodies included in the soil heat storage system by taking into account the contract power time. The state of heat accumulation in the soil by electricity supply to the heating bodies for the contract power time is thus made adequate for floor heating with heat accumulated in the soil as its heat source. The arrangement of the invention desirably enhances the heating efficiency by electricity supply to the heating bodies for the contract power time.

In one aspect of the second floor heating construction of the invention, the gross heating value set according to the contract power time is corrected to increase with an increase in distance between a building floor and a surface layer of the soil heat storage system. This arrangement enables further enhancement of the heating efficiency and further cost reduction.

A third floor heating construction of the invention using heat accumulated in soil as a heat source for floor heating has: a soil heat storage system that includes multiple heating bodies placed on surface of the soil to accumulate heat in the soil; and a control module that identifies requirement or non-requirement for electricity supply to the multiple heating bodies included in the soil heat storage system, based on a monitoring result of temperature of a building floor by a floor temperature sensor, and controls midnight power-based electricity supply to the multiple heating bodies based on an identification result of the requirement or non-requirement. The control of the midnight power-based electricity supply by the control module has a specific control mode that performs the midnight power-based electricity supply to the multiple heating bodies at a frequency of once two days, regardless of the monitoring result of the floor temperature sensor.

Only the midnight power is usable for the electricity supply to the multiple heating bodies. In the electricity supply control of the heating bodies according to the output of the relatively low sensitive floor temperature sensor, however, the daytime may come with no midnight power-based electricity supply. For example, when the floor temperature sensor has the relatively low sensitivity and is unable to sense a floor temperature shift of 1°C level, the day time may come with no midnight power-based electricity supply to the multiple heating bodies. The following night accordingly comes without any electricity supply. In this case, the whole day elapses as a non-heat accumulation day without any heat accumulation in the soil by the electricity supply to the multiple heating bodies. The presence of this non-heat accumulation day gives the state of insufficient heat accumulation in the soil. The heat accumulated in the soil is thus often insufficient as the heat source for floor heating in the following day after the non-heat accumulation day.

Application of a highly sensitive sensor to the floor heating sensor solves this problem, but causes hunting or frequent switchover between the ON state and the OFF state of electricity supply to the heating bodies. The use of a highly sensitive sensor is thus not a practical solution.

In the third floor heating construction of the invention, on the other hand, the midnight power-based electricity supply to the multiple heating bodies is performed at the frequency of once two days, regardless of the monitoring result of the floor temperature sensor. At night in the following day after the non-heat accumulation day without the midnight power-based electricity supply, the midnight power-based electricity supply to the heating bodies is performed to accumulate heat in the soil. This arrangement enables effective floor heating with the heat accumulated in the soil as the heat source, while not requiring a highly sensitive sensor for the floor temperature sensor to have the cost advantage.

A fourth floor heating construction of the invention using heat accumulated in soil as a heat source for floor heating has: a soil heat storage system that includes multiple heating bodies placed on surface of the soil to accumulate heat in the soil; and a control module that controls electricity supply to the multiple heating bodies included in the soil heat storage system. The control module controls an electricity supply state of the multiple heating bodies to vary a gross heating value of the multiple heating bodies, in response to a requirement for floor heating. The requirement for floor heating specifies, for example, the power level of floor heating according to the monitored temperature of the building floor and the monitored outside air temperature.

In one aspect of the fourth floor heating construction of the invention to vary the gross heating value of the multiple heating bodies, the multiple heating bodies included in the soil heat storage system are arranged to allow individual electricity supply to each heating body and to allow simultaneous electricity supply to plural heating bodies in one heating body group. The control module changes the number of heating bodies or the number of heating body groups as an object of electricity supply. In another aspect of the fourth floor heating construction of the invention to vary the gross heating value of the multiple heating bodies, the multiple heating bodies included in the soil heat storage system are arranged to enable switchover of a connection status of the multiple heating bodies to a power feed line between a serial connection and a parallel connection. The control module performs electricity supply to the multiple heating bodies after a switchover of the connection status either to the serial connection or the parallel connection.

As mentioned previously, the gross heating value of the multiple heating bodies affects the state of heat accumulation in the soil. The fourth floor heating construction having either of these arrangements controls the state of electricity supply to the multiple heating bodies to vary the gross heating value. The controlled electricity supply of the multiple heating bodies enables the state of heat accumulation in the soil to be adequate for floor heating with heat accumulated in the soil as its heat source. This effectively enhances the heating efficiency by the electricity supply to the heating bodies.

In still another aspect of the fourth floor heating construction of the invention to vary the gross heating value of the multiple heating bodies, the control module compares a monitoring result of temperature of a building floor by a floor temperature sensor with a monitoring result of temperature of the outside air in the environment of the floor heating construction by an outside air temperature sensor and increases the gross heating value of the multiple heating bodies with an increase in temperature difference between the building floor temperature and the outside air temperature that is lower than the building floor temperature. This aspect has the following advantage.

The high temperature setting of floor heating is generally desired when the outside air temperature is lower than the building floor temperature. A greater value is set to the gross heating value of the multiple heating bodies when there is a larger temperature difference between the building floor temperature and the outside air temperature that is lower than the building floor temperature. Setting the large gross heating value allows the high temperature setting of floor heating, thus attaining the comfortable heating environment.

The technique of the invention is not restricted to the floor heating construction using heat accumulated in the soil as the heat source floor heating, but is also applicable to a design method of the floor heating construction.

Brief Description of the Drawings

Fig. 1 shows the general overview of a floor heating construction YK;
Fig. 2 shows the structure of a soil heat storage system in relation to the floor of the floor heating construction YK;
Fig. 3 is a map referred to for setting an area gross heating value of multiple electric resistance heating panels included in the soil heat storage system;
Fig. 4 is a map referred to for setting a factor k(t) corresponding to distance 't';
Fig. 5 is a flowchart showing an electricity supply control routine of the soil heat storage system using midnight power;
Fig. 6 shows the arrangement of multiple electric resistance heating panels in the foundation of the floor heating construction YK in the room layout of a first floor;
Fig. 7 is a block diagram showing the electric connection of multiple electric resistance heating panels with a control device; and
Fig. 8 shows the state of electricity supply to electric resistance heating panels.

Best Modes of Carrying Out the Invention

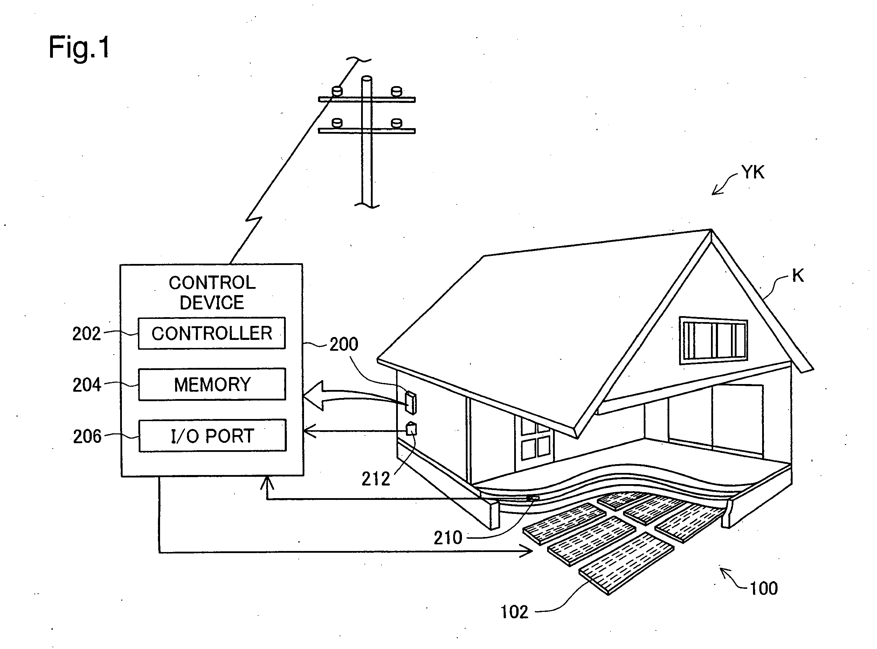

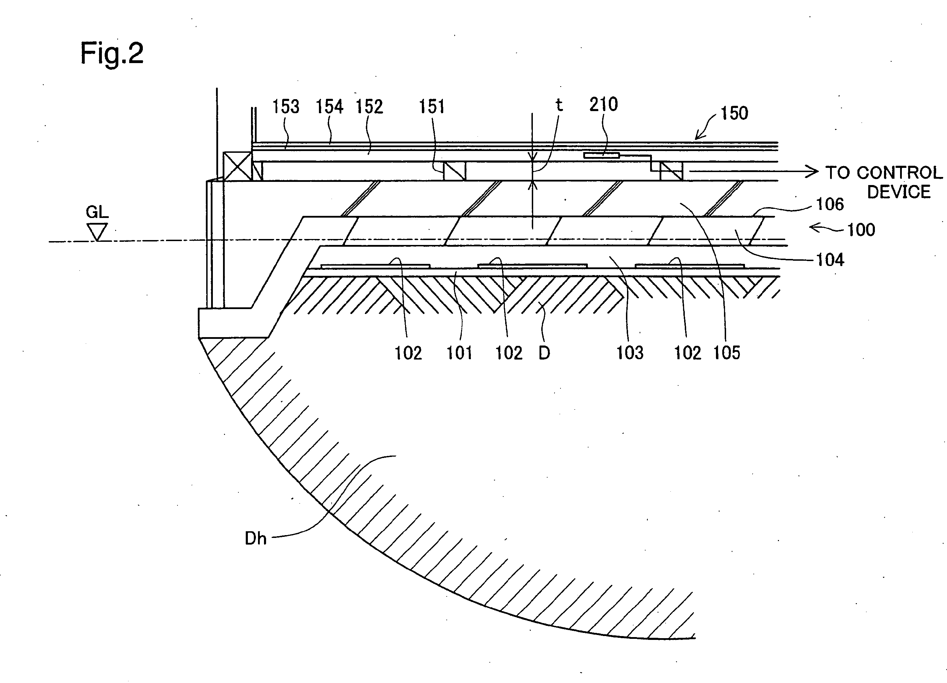

One aspect of the floor heating construction of the invention is described below as a preferred embodiment with reference to the accompanied drawings. Fig. 1 shows the general overview of a floor heating construction YK. Fig. 2 shows the structure of a soil heat storage system 100 in relation to the floor of the floor heating construction YK.

As illustrated in Fig. 1, the floor heating construction YK of this embodiment has a soil heat storage system 100 installed in the foundation of its building structure K. A control device 200 of the soil heat storage system 100 is attached to the wall of the building structure K. The soil heat storage system 100 accumulates heat in soil D and includes a first sand layer 101, multiple electric resistance heating panels 102, a second sand layer 103, a crushed stone layer 104, and a concrete layer 105, which are placed on the soil D and are laid one upon another upward in the foundation of the building structure K.

This structure is conventionally known. In this embodiment, the first sand layer 101 is made by plate compaction of, for example, pit sand free of gravels to have a depth of approximately 30 mm. The electric resistance heating panel 102 is a flat panel with heating planes and is made from folded electric resistance heating wires of water tightness. Multiple electric resistance heating panels 102 are placed on the top face of the first sand layer 101. The second sand layer 103 is formed to cover over the multiple electric resistance heating panels 102 on the first sand layer 101. The second sand layer 103 is made of, for example, pit sand free of gravels to have a depth of approximately 100 mm. The crushed stone layer 104 is made by plate compaction of, for example, crushed stones to have a depth of approximately 120 mm. The concrete layer 105 is approximately 150 mm in depth and has the function of preventing water invasion into the lower layers and the function of protecting the lower layers. The concrete layer 105 is integrated with the concrete foundation of the building structure K and is located above a ground surface GL. A moisture proof film 106 is interposed between the concrete layer 105 and the crushed stone layer 104.

In the soil heat storage system 100 of this structure, in response to the electricity supply, the electric resistance heating panels 102 are switched on to produce heat, which is accumulated in the soil D to form a reverse dome-shaped heat storage area Dh in the soil D. Formation of such a heat storage area is also conventionally known.

A building floor 150 located above the soil heat storage system 100 has lumber girders 151, floor joists 152, a floor base sheet 153, and a wooden floor material 154, which are laid one upon another upward. The combination of the lumber girders 151 with the floor joists 152 makes a distance 't' between the bottom face of the building floor 150 and the top face of the soil heat storage system 100. Namely the distance 't' is varied by changing the dimensions of the lumber girders 151 and the floor joists 152 and their layout. For example, the distance 't' is set equal to 0 in the floor structure where the floor base sheet 153 with the wooden floor material 154 is directly spread over the concrete layer 105 with omission of the lumber girders 151 and the floor joists 152.

As shown in Fig. 1, the control device 200 receives the power feed from the electric power cable and supplies power to the electric resistance heating panels 102 in the soil heat storage system 100. The control device 200 is constructed as a logic operation circuit including a CPU, a ROM, and a RAM. The control device 200 includes a controller 202 that controls the electricity supply to the electric resistance heating panels 102, a memory 204 that stores an electricity supply control program for the electric resistance heating panels 102 and other control programs, and an I/O port 206 that is connected with a floor temperature sensor 210 measuring the temperature of the building floor 150 (floor temperature) and an outside air temperature sensor 212 measuring the outside air temperature.

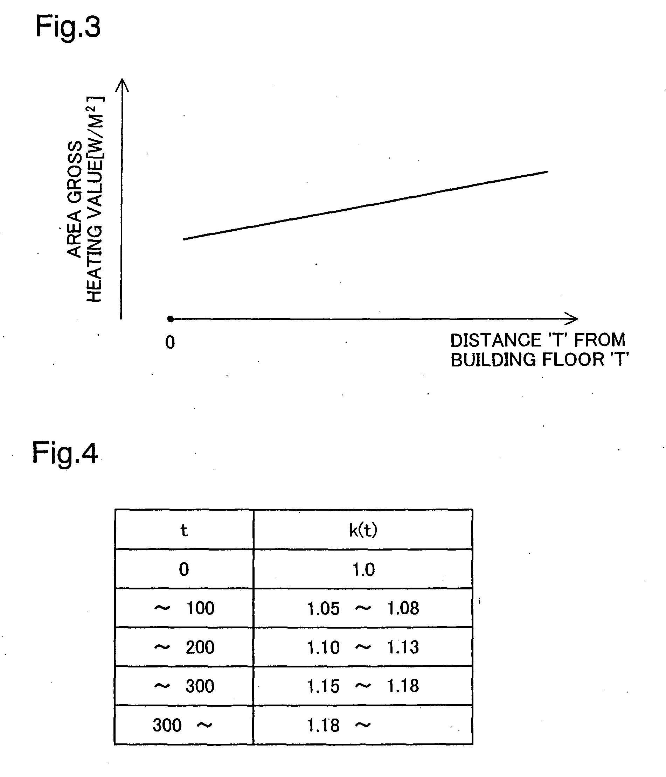

The soil heat storage system 100 of the above structure is installed in the floor heating construction YK. Fig. 3 is a map referred to for setting an area gross heating value of the multiple electric resistance heating panels 102 included in the soil heat storage system 100.

For the comfortable floor heating in the floor heating construction YK, it is essential to adequately specify the area gross heating value of the multiple electric resistance heating panels 102 included in the soil heat storage system 100. A heating load [W/m$^2$] required for the floor heating is covered by the heat source of accumulated heat in the soil D in response to the electricity supply to the electric resistance heating panels 102.

The radiation of heat accumulated in the soil D to the building floor 150 is affected by the distance 't' between the building floor 150 and the soil heat storage system 100. In this embodiment, the floor heating construction YK is under a contract with a power company and uses midnight power for the electricity supply to the electric resistance heating panels 102. The contract with the power company specifies a power supply time or contract power time. The soil heat storage system 100 of this embodiment determines the area gross heating value of the multiple electric resistance heating panels 102 included in the soil heat storage system 100 by taking into account the distance 't' and the contract power time.

As shown in the map of Fig. 3, the area gross heating value [W/m$^2$] of the multiple electric resistance heating panels 102 included in the soil heat storage system 100 is set to increase with an increase in distance 't' between the building floor 150 and the soil heat storage system 100. This map may be used to set the area gross heating value [W/m$^2$] only corresponding to the distance 't'.

The contract power time is taken into account for determination of the area gross heating value [W/m$^2$] according to Equation (1) given below:

Design Gross Heating value Sw = Standard Heating Value

$$S0 \times f(Kd \cdot H) \times k(t) \times ks \tag{1}$$

where the standard heating value S0 is equal to 60 [W/m$^2$·h] and f(Kd·H) = 24 / (contract power time) [h] .

In Equation (1), the standard heating value S0 shows a required heating value for heating the floor of 1m$^2$ in area per hour, and ks denotes a coefficient for preventing a potential insufficiency of heating load and is set equal to or greater than, 1.

A factor f (Kd·H) is set equal to 1 under the condition of 24-hour continuous electricity supply for floor heating. The contract power time of midnight power is the denominator of this factor. For example, when the contract power time is 8 hours in the night, the factor f (Kd·H) is 24/8 (=3). Namely the factor f(Kd·H) is the multiplier to give the greater area gross heating value [W/m$^2$] of Equation (1) against the shorter contract power time.

A factor k(t) is the multiplier to make reflection of the distance 't' shown in the map of Fig. 3 on Equation (1). Fig. 4 is a map referred to for setting the factor k (t) corresponding to the distance 't' . As shown in the map of Fig. 4, the factor k(t) is the multiplier to give the greater area gross heating value [W/m$^2$] of Equation (1) against the wider distance 't' between the building floor 150 and the soil heat storage system 100.

As discussed above, the area gross heating value [W/m$^2$] of the multiple electric resistance heating panels 102 included in the soil heat storage system 100 is determined by taking into account the contract power time of midnight power and the distance 't' between the building floor 150 and the soil heat storage system 100. The area gross heating value [W/m$^2$] of the multiple electric resistance heating panels 102 thus determined is then multiplied by the floor area of the floor heating construction YK or the floor heating-related floor area to give a gross heating value [W] of the floor heating construction YK. The number of electric resistance heating panels 102 is determined to satisfy the gross heating value [W] of the floor heating construction YK. The electric resistance heating panels 102 of the determined number are placed on the first sand layer 101 and are covered by the second sand layer 103 in the soil heat storage system 100.

The multiple electric resistance heating panels 102 may be arranged at equal intervals or at irregular intervals in the foundation of the floor heating construction YK. For example, the greater number of electric resistance heating panels 102 may be placed in the frequently occupied room spaces, for example, a bathroom, a living room, a dining room, and a kitchen, compared with the generally empty room spaces, for example, corridors and an entrance hall.

As described above, the soil heat storage system 100 of the embodiment takes into account the distance 't' between the bottom face of the building floor 150 and the top face of the soil heat storage system 100 and sets the greater area gross heating value [W/m$^2$] of the multiple electric resistance heating panels 102, which is required for heat accumulation in the soil D, against the wider distance 't'. The distance 't' between the bottom face of the building floor 150 and the top face of the soil heat storage system 100 affects the radiation of heat accumulated in the soil D by the multiple electric resistance heating panels 102 to the building floor 150. The floor heating construction YK of the embodiment effectively utilizes the heat accumulated in the soil D as the heat source and thus desirably enhances the efficiency of floor heating. The enhanced efficiency of floor heating naturally attains the significant cost reduction.

The area gross heating value [W/m$^2$] of the multiple electric resistance heating panels 102 is determined by taking into account the power supply time for the electricity supply to the electric resistance heating panels 102 and the contract power time of midnight power affecting the heat accumulation state in the soil D. The area gross heating value

[W/m$^2$] of the multiple electric resistance heating panels 102 is set to increase with a decrease in contract power time. The soil heat storage system 100 of this embodiment controls the electricity supply to the electric resistance heating panels 102 within the contract power time to attain the optimum heat accumulation state in the soil for floor heating of the floor heating construction YK. Such control of the electricity supply to the electric resistance heating panels 102 within the contract power time desirably enhances the floor heating efficiency.

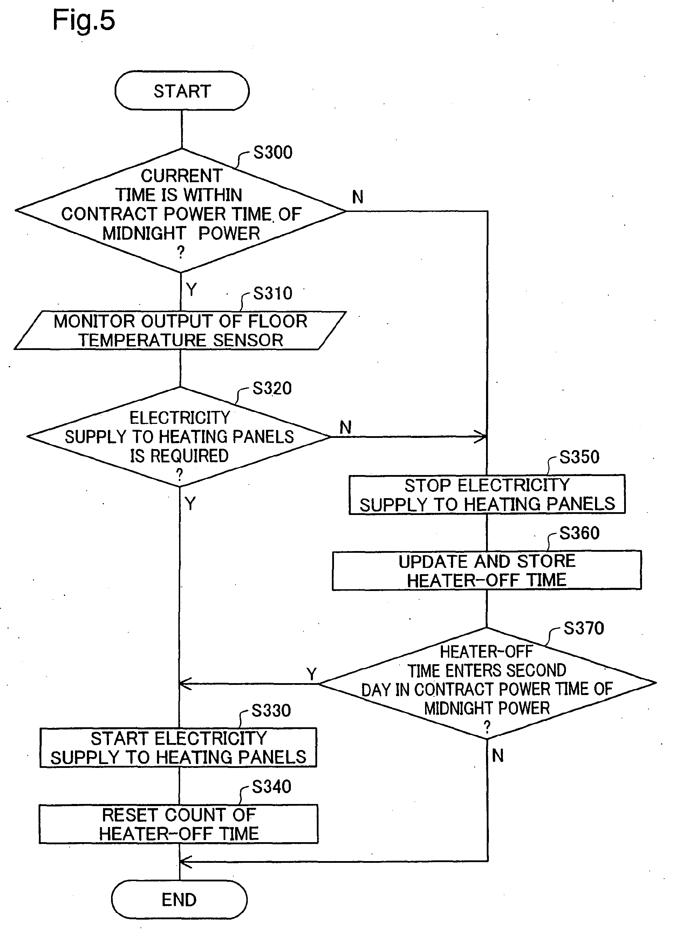

The electricity supply control of the soil heat storage system 100 is discussed in detail. Fig. 5 is a flowchart showing an electricity supply control routine of the soil heat storage system 100 using midnight power.

The electricity supply control routine of Fig. 5 is repeatedly performed only in a cold season requiring the floor heating. For example, the cold season may be determined by the user's ON operation of a main switch (not shown) to activate the control device 200 in autumn and the user's OFF operation of the main switch to inactivate the control device 200 in spring. In another example, the cold season may be determined by a built-in clock of the control device 200, which detects a shift of the season from autumn to spring. Such seasonal electricity supply control is ascribed to that the soil heat storage system 100 is used for only the cold season requiring the floor heating.

The electricity supply control routine of Fig. 5 first determines whether the current time is within the contract power time of midnight power usable for the power supply of the soil heat storage system 100 (step S300). A negative answer is given at step S300 when the current time is, for example, in a midday time zone and is out of the contract power time. In response to the negative answer at step S300, the electricity supply control routine goes to step S350 to stop the electricity supply (described later). For the convenience of explanation of the electricity supply control, it is here assumed that the current time is within the contract power time of midnight power. The electricity supply control is described on the assumption of subsequent time elapsing. In the following description, the contract power time of midnight power is assumed to be from 11 midnight (pm 11) to 7 in the morning (am 7).

When the current time is 11 pm that is within the contract power time of midnight power, an affirmative answer is given at step S300. The electricity supply control routine then monitors the floor temperature output from the floor temperature sensor 210 located in the building floor 150 (step S310) and identifies the requirement or non-requirement for the electricity supply to the electric resistance heating panels 102 in the soil heat storage system 100, based on the monitoring result of the floor temperature (step S320).

The decision of step S320 identifies the requirement for the electricity supply to the electric resistance heating panels 102, when the floor temperature measured by the floor temperature sensor 210 is continuously lower than a preset reference level for a predetermined time period, for example, for 10 minutes or for 30 minutes. In the floor heating construction YK of this embodiment, radiation of heat accumulated in the soil D by the soil heat storage system 100 is used as the heat source for floor heating. The identification of the requirement or non-requirement for an extremely short time span is unpractical.

Upon identification of the requirement for the electricity supply at step S320, the electricity supply control routine starts the electricity supply to the electric resistance heating panels 102 (step S330) and resets the count of a heater off time (described later) (step S340). The electricity supply control routine is terminated after the reset of the time count at step S340.

The time elapses with the electricity supply to the electric resistance heating panels 102. The electricity supply control routine is executed again, for example, at a midnight time (for example, 2 am) that is still within the contract power time of midnight power. In this case, an affirmative answer is given again at step S300. When the floor temperature monitored by the floor temperature sensor 210 at step S310 has reached a preset reference temperature that does not require any further electricity supply to the electric resistance heating panels 102, a negative answer is given at step S320. The electricity supply control routine then stops the electricity supply to the electric resistance heating panels 102 (step S350) and updates the heater off time and stores the updated heater off time (step S360). The heater off time represents a time elapsed since the stop of the electricity supply to the electric resistance heating panels 102.

The electricity supply control routine subsequently determines whether the updated and stored heater off time enters a second day in the contract power time of midnight power (step S370). Some concrete examples of the decision at step S370 are given below.

In one example, the electricity supply has continued from 11 pm the day before yesterday as the start time in the contract power time of midnight power in a previous day to 3 midnight (3 am) or later yesterday after elapse of at least 4 hours, which is half the contract power time of 8 hours. The continuation of the electricity supply to the electric resistance heating panels 102 for this relatively long time enables relatively sufficient heat accumulation in the soil D. In this state, when the inactivation of the electricity supply to the electric resistance heating panels 102 has continued for or over 24 hours, it is determined at step S370 that the heater off time enters the second day in the contact power time of midnight power. An affirmative answer is given at step S370, for example, when the heater off time started at an electricity supply stop time, for example, at 4 midnight (4 am) yesterday, in the contract power time of midnight power in a previous day and has continued over 7 am yesterday as the end time in the contract power time of midnight power in the previous day to 4 midnight (4 am) today as the corresponding time in the contract power time of midnight power in a present day.

In another example, the electricity supply has continued from 11 pm the day before yesterday as the start time in the contract power time of midnight power in a previous day to 1 midnight (1 am) yesterday after elapse of a relatively short time. The continuation of the electricity supply to the electric resistance heating panels 102 for this relatively short time may allow only insufficient heat accumulation in the soil D. In this state, even when the inactivation of the electricity supply to the electric resistance heating panels 102 has continued for less than 24 hours, it is determined at step S370 that the heater off time enters the second day in the contact power time of midnight power. An affirmative answer is given at step S370, for example, when the heater off time started at an electricity supply stop time, for example, at 1 midnight (1 am) yesterday, in the contract power time of midnight power in a previous day and has continued over 7 am yesterday as the end time in the contract power time of midnight power in the previous day to 11pm yesterday as the start time in the contract power time of midnight power in a present day. These are only examples of the decision at step S370. The decision of step S370 may be based on any of diverse other criteria. For example, an affirmative answer is given at step S370 when there was no electric supply to the electric resistance heating panels 102 over the whole contract power time of midnight power in a previous day to the start time of the contract power time of midnight power in a present day.

The affirmative answer at step S370 shifts the electricity supply control routine to step S330 to start the electricity supply to the electric resistance heating panels 102 and subsequently to step S340 to reset the count of the heater off time. The electricity supply control routine is terminated after the reset of the time count at step S340. The negative answer at step S370 immediately terminates the electricity supply control routine without any further processing.

In one possible modification, the processing flow to step S330 after the affirmative answer at step S370 may be discriminated from the processing flow to step S330 after the affirmative answer at step S320. For this purpose, a second day flag may be set in response to the affirmative answer at step S370. In this case, a flag identification step is provided before the decision of step S320 to identify the status of the second day flag. When the flag identification step identifies that the second day flag has been set in the previous cycle of this routine (that is, the processing flow to step S330 after the affirmative answer at step 5370), the current cycle of this routine is allowed to proceed to step S330 without the decision of step 5320.

The electricity supply control of the electric resistance heating panels 102 has advantages discussed below.

The floor heating construction YK of this embodiment uses the heat accumulated in the soil D as the heat source of floor heating. Radiation of heat accumulated in the soil D to the building floor 150 is slow and moderate, compared with a direct floor heating system using hot water pipes laid in the building floor. In the floor heating construction YK of the embodiment, only the midnight power is utilized for the electricity supply to the electric resistance heating panels 102. Such midnight power-based electricity supply to the electric resistance heating panels 102 allows heat accumulation in the soil only for the contract power time of midnight power.

In the soil heat storage system 100 of such characteristics, the electricity supply control of the electric resistance heating panels 102 is performed according to the output of the floor temperature sensor 210 as described above. Application of a highly sensitive sensor to the floor temperature sensor 210 enhances the frequency of the decision at step S320 to identify the requirement or the non-requirement for the electricity supply and causes frequent switchover between the ON state and the OFF state of the electricity supply to the electric resistance heating panels 102. The frequent switchover between the ON state and the OFF state of the electricity supply to the electric resistance heating panels 102, however, undesirably lowers the efficiency of heat accumulation. Besides the use of the highly sensitive sensor increases the total cost.

Application of a relatively low sensitive sensor to the floor temperature sensor 210 enables the efficient heat accumulation in the soil D and reduces the total cost. In the electricity supply control of the electric resistance heating panels 102 according to the output of the relatively low sensitive floor temperature sensor 210, however, the daytime may come with no midnight power-based electricity supply or with only insufficient midnight power-based electricity supply for a relatively short time. Only the midnight power is usable for the electricity supply to the electric resistance heating panels 102. The negative answer is thus given at step S300 in the electricity supply control routine of Fig. 5. The following night accordingly comes without any electricity supply. In this case, the whole day elapses as a non-heat accumulation day without any heat accumulation in the soil D by the electricity supply to the electric resistance heating panels 102. The presence of this non-heat accumulation day gives the state of insufficient heat accumulation in the soil D. The heat accumulated in the soil D is thus often insufficient as the heat source for floor heating in the following day after the non-heat accumulation day.

In the case of the insufficient heat accumulation state in the soil D due to the low sensitive floor temperature sensor 210, after the affirmative answer at step S370, the electricity supply control routine starts the midnight power-based electricity supply to the electric resistance heating panels 102. The electricity supply to the electric resistance heating panels 102 is thus performed at a frequency of once two days, regardless of the monitoring result of the output from the floor temperature sensor 210. At night in the following day after the non-heat accumulation day without the midnight power-based electricity supply, the midnight power-based electricity supply to the electric resistance heating panels 102 is performed to accumulate heat in the soil D. This arrangement enables effective floor heating with the heat accumulated in the soil D as the heat source, while not requiring a highly sensitive sensor for the floor temperature sensor 210 to have the cost advantage.

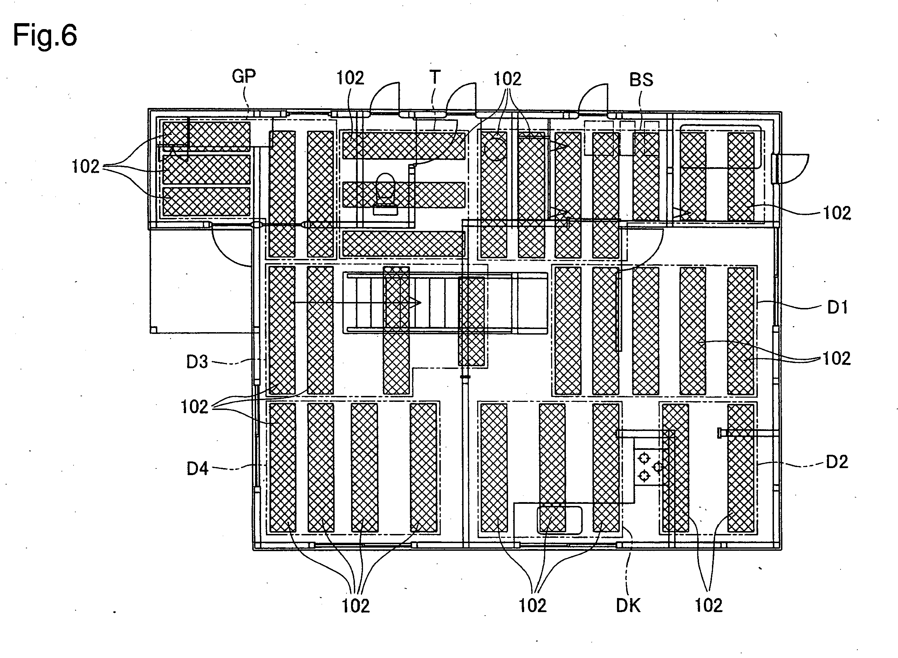

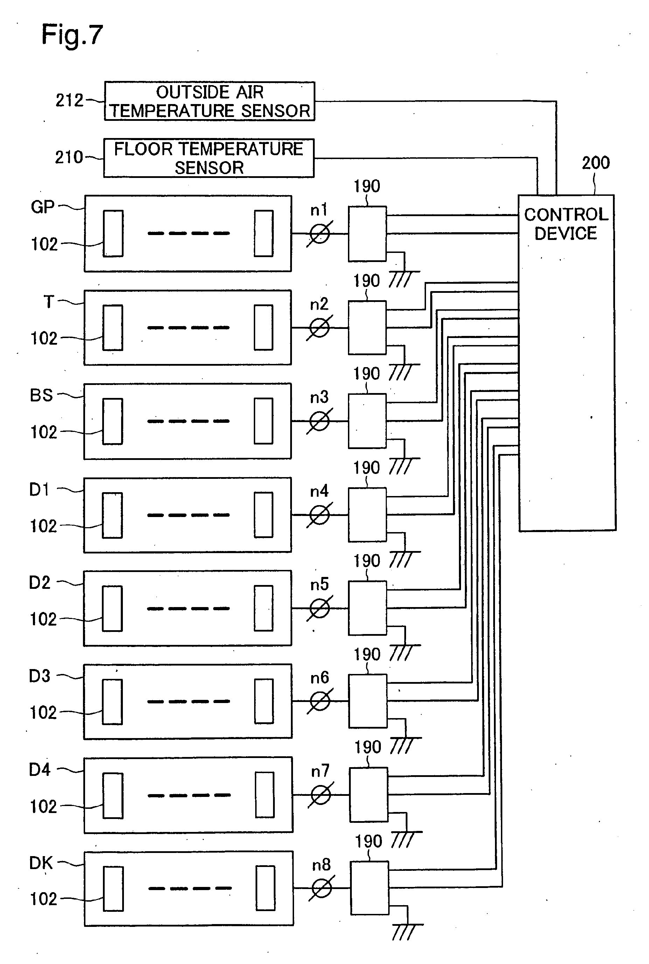

The gross heating value of the electricity resistance heating panels 102 is varied for the effective heat accumulation in the soil D. Fig. 6 shows the arrangement of the multiple electric resistance heating panels 102 in the foundation of the floor heating construction YK in the room layout of a first floor. Fig. 7 is a block diagram showing the electric connection of the multiple electric resistance heating panels 102 with the control device 200.

In the illustrated example, the room layout divides the first floor into eight blocks, an entrance and hall block GP, a toilet block T, a bathroom block BS, residential blocks D1 through D4, and a kitchen and dining block DK. Plural electric resistance heating panels 102 are laid in each of the eight blocks as shown by the cross-hatched rectangles in Fig. 6.

The respective blocks have different numbers of electric resistance heating panels 102 as shown in Fig. 6. The number of electric resistance heating panels 102 laid in each block is determined by taking into account the expected time of room occupancy and the presence or the absence of a fire source or a heat source in the room. In the illustrated example of Fig. 6, the entrance and hall block GP is an access way between the inside and the outside of the floor heating construction YK and has no fire source or heat source. The entrance and hall block GP accordingly has a relatively large number of electric resistance heating panels 102 laid in a relatively narrow room area. The kitchen and dining block DK and the adjacent residential block D2 adjoining to the kitchen have relatively less numbers of electric resistance heating panels 102, because of the presence of the fire source or heat source in the kitchen. The residential block D3 including the staircase and the corridor has a very low potential of room occupancy and accordingly has a less number of electric resistance heating panels 102.

Multiple power supply controllers 190 are connected with the control device 200 via midnight power feed lines and control lines to control the electricity supply to the electric resistance heating panels 102 installed in the respective multiple blocks. The power supply controller 190 provided for each block is designed to set an adequate power supply mode and switch over the on-off state of the electricity supply to the plural electric resistance heating panels 102 installed in the block. In a simultaneous power supply mode, the electricity is supplied to all the electric resistance heating panels 102 installed in one block. In an individual power supply mode, the electricity is individually supplied to a varied number of electric resistance heating panels 102 selected among all the electric resistance heating panels 102 installed in one block. For example, the entrance and hall block GP has five electric resistance heating panels 102. In the simultaneous power supply mode, the power supply controller 190 controls the on-off state of the electricity supply to simultaneously supply the electricity to all the five electric resistance heating panels 102. In the individual power supply mode, the power supply controller 190 controls the on-off state of the electricity supply to individually supply the electricity to only the three electric resistance heating panels 102 installed in the entrance or to individually supply the electricity to only the two electric resistance heating panels 102 installed in the hall. The on-off state of the electricity supply may be switched over, regardless whether the electric resistance heating panels 102 have a serial connection or a parallel connection.

In the simultaneous power supply mode, the electricity may be supplied simultaneously to all the five electric resistance heating panels 102 in a serial connection or to all the five electric resistance heating panels 102 in a parallel connection. In the individual power supply mode, the electricity may be supplied individually to only the three electric resistance heating panels 102 in the entrance arranged in a serial connection or in a parallel connection or to only the two electric resistance heating panels 102 in the hall arranged in a serial connection or in a parallel connection. The control device 200 controls the power supply controller 190 of each block to switch over the on-off state of the electricity supply in the block by setting the power supply mode and perform the electricity supply to the electric resistance heating panels 102 installed in the block.

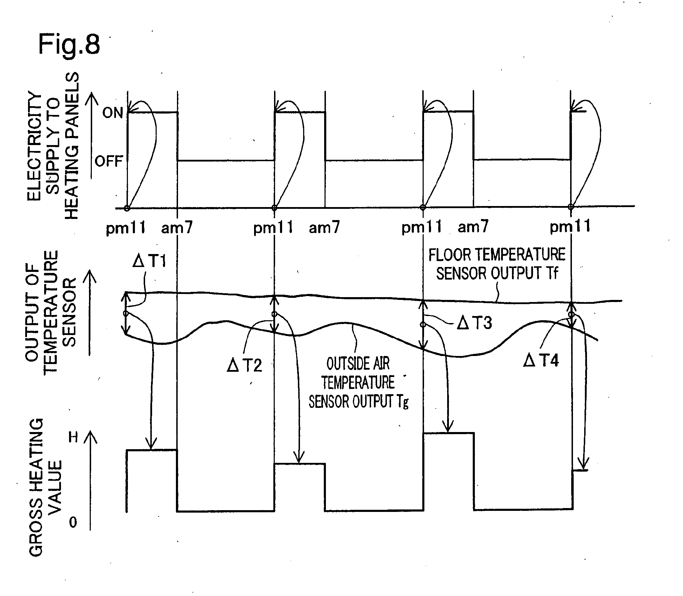

Fig. 8 shows the state of electricity supply to the electric resistance heating panels 102. As shown in Fig. 8, at the start time (11 pm) in the power contract time of midnight power, the control device 200 controls the power supply controller 190 of each block to start the electricity supply to the electric resistance heating panels 102 installed in the block. At the end time (7 am) in the power contract time of midnight power, the control device 200 controls the power supply controller 190 of each block to stop the electricity supply to the electric resistance heating panels 102 installed in the block. The control device 200 monitors a floor temperature Tf output from the floor temperature sensor 210 and an outside air temperature Tg (< Tf) output from the outside air temperature sensor 212 and sets a greater value to the gross heating value by the electricity supply to the electric resistance heating panels 102 against a larger temperature difference $\Delta T$ between the floor temperature Tf and the outside air temperature Tg. In the illustrated example of Fig. 8, there are temperature differences $\Delta T1$, $\Delta T2$, $\Delta T3$, and $\Delta T4$ at the respective start times of a first day, a second day, a third day, and a fourth day in the contract power time of midnight power. Here the temperature differences satisfy the relation of $\Delta T4 < \Delta T2 < \Delta T1 < \Delta T3$. A smallest value is set to the gross heating value by the electricity supply to the electric resistance heating panels 102 for the contract power time of midnight power in the fourth day. The setting of the gross heating value increases in the order of the second day, the first day, and the third day.

The control device 200 sends at least one of a mode switchover control signal for switching over the power supply mode between the simultaneous power supply mode and the individual power supply mode and a serial-parallel control signal for switching over the connection status of the plural electric resistance heating panels 102 between the serial connection and the parallel connection, to the power supply controller 190 of each block. The control device 200 accordingly controls the state of electricity supply to the electric resistance heating panels 102 to vary the gross heating value of the electric resistance heating panels 102, thus changing the state of heat accumulation in the soil D. Such control has the following advantage.

The high temperature setting of floor heating is generally desired when the outside air temperature is lower than the building floor temperature. In the soil heat storage system 100 of this embodiment using the heat accumulated in the soil D as the heat source for floor heating, the heat radiation gradually and slowly raises the temperature of the building floor 150 and exerts the floor heating effect of the floor heating construction YK. The low outside air temperature naturally cools down the floor heating construction YK. A higher increase rate of the floor temperature of the building floor 150 attains the comfortable floor heating of the floor heating construction YK.

By taking into account such characteristics, when there is a large temperature difference between the building floor temperature and the outside air temperature that is lower than the building floor temperature, the soil heat storage system 100 of this embodiment increases the gross heating value by the electricity supply to the electric resistance heating panels 102 and accelerates heat accumulation in the soil D. The heat accumulated in the soil D as the heat source for floor heating gradually and slowly raises the temperature of the building floor 150 as mentioned above. Setting the large gross heating value accelerates the heat accumulation in the soil D and allows the high temperature setting of floor heating, thus attaining the comfortable heating environment.

The embodiment and its modifications discussed above are to be considered in all aspects as illustrative and not restrictive. There may be many other modifications, changes, and alterations without departing from the scope or spirit of the main characteristics of the present invention. The scope and spirit of the present invention are indicated by the appended claims, rather than by the foregoing description.

## Claims

1. A floor heating construction using heat accumulated in soil as a heat source for floor heating,
   the floor heating construction being equipped with a soil heat storage system that includes multiple heating bodies placed on surface of the soil to accumulate heat in the soil,
   wherein a gross heating value of the multiple heating bodies included in the soil heat storage system is set according to a distance between a building floor and a surface layer of the soil heat storage system, in such a manner that a greater value is set to the gross heating value corresponding to a wider distance.

2. The floor heating construction in accordance with claim 1, wherein the gross heating value of the multiple heating bodies is set in a range of 160 to 200 W/m$^2$ corresponding to the distance in a range of 0 to 300 mm.

3. The floor heating construction in accordance with either one of claims 1 and 2, wherein the surface layer of the soil heat storage system is a concrete layer.

4. A floor heating construction using heat accumulated in soil as a heat source for floor heating,
   the floor heating construction comprising:

   a soil heat storage system that includes multiple heating bodies placed on surface of the soil to accumulate heat in the soil; and
   a control module that controls midnight power-based electricity supply to the multiple heating bodies included in the soil heat storage system,

   wherein a gross heating value of the multiple heating bodies included in the soil heat storage system is set according to a contract power time based on a contract of midnight power supply, in such a manner that a greater value is set to the gross heating value corresponding to a shorter contract power time.

5. The floor heating construction in accordance with claim 4, wherein the gross heating value set according to the contract power time is corrected to increase with an increase in distance between a building floor and a surface layer of the soil heat storage system.

6. A floor heating construction using heat accumulated in soil as a heat source for floor heating,
   the floor heating construction comprising:

a soil heat storage system that includes multiple heating bodies placed on surface of the soil to accumulate heat in the soil;

a floor temperature sensor that monitors temperature of a building floor; and

a control module that identifies requirement for electricity supply to the multiple heating bodies included in the soil heat storage system, based on a monitoring result of the floor temperature sensor, and controls midnight power-based electricity supply to the multiple heating bodies based on an identification result of the requirement or non-requirement,

wherein the control of the midnight power-based electricity supply by the control module has a specific control mode that performs the midnight power-based electricity supply to the multiple heating bodies at a frequency of once two days, regardless of the monitoring result of the floor temperature sensor.

7. The floor heating construction in accordance with claim 6, wherein the specific control mode performs the midnight power-based electricity supply to the multiple heating bodies for a shorter time period based on a contract power time based on a contract of midnight power supply.

8. A floor heating construction using heat accumulated in soil as a heat source for floor heating, the floor heating construction comprising:

a soil heat storage system that includes multiple heating bodies placed on surface of the soil to accumulate heat in the soil; and

a control module that controls electricity supply to the multiple heating bodies included in the soil heat storage system,

wherein the control module controls an electricity supply state of the multiple heating bodies to vary a gross heating value of the multiple heating bodies, in response to a requirement for floor heating.

9. The floor heating construction in accordance with claim 8, wherein the multiple heating bodies included in the soil heat storage system are arranged to allow individual electricity supply to each heating body and to allow simultaneous electricity supply to plural heating bodies in one heating body group, and

the control module changes the number of heating bodies or the number of heating body groups as an object of electricity supply to vary the gross heating value of the multiple heating bodies.

10. The floor heating construction in accordance with claim 8, wherein the multiple heating bodies included in the soil heat storage system are arranged to enable switchover of a connection status of the multiple heating bodies to a power feed line between a serial connection and a parallel connection, and

the control module performs electricity supply to the multiple heating bodies after a switchover of the connection status either to the serial connection or the parallel connection to vary the gross heating value of the multiple heating bodies.

11. The floor heating construction in accordance with any one of claims 8 through 10, the floor heating construction further having:

a floor temperature sensor that monitors temperature of a building floor; and

an outside air temperature sensor that monitors temperature of the outside air in the circumference of the floor heating construction,

wherein the control module compares a monitoring result of the floor temperature sensor with a monitoring result of the outside air temperature sensor and increases the gross heating value of the multiple heating bodies with an increase in temperature difference between the building floor temperature and the outside air temperature that is lower than the building floor temperature.

12. A design method of a floor heating construction that uses heat accumulated in soil as a heat source for floor heating, the design method comprising:

installing a soil heat storage system in a foundation of the floor heating construction, where the soil heat storage system includes multiple heating bodies placed on surface of the soil to accumulate heat in the soil; and

setting a gross heating value of the multiple heating bodies included in the soil heat storage system according to a distance between a building floor and a surface layer of the soil heat storage system, in such a manner that a greater value is set to the gross heating value corresponding to a wider distance.

**13.** A design method of a floor heating construction that uses heat accumulated in soil as a heat source for floor heating, the design method comprising:

installing a soil heat storage system in a foundation of the floor heating construction, where the soil heat storage system includes multiple heating bodies placed on surface of the soil to accumulate heat in the soil;

controlling midnight power-based electricity supply to the multiple heating bodies included in the soil heat storage system; and

setting a gross heating value of the multiple heating bodies included in the soil heat storage system according to a contract power time based on a contract of midnight power supply, in such a manner that a greater value is set to the gross heating value corresponding to a shorter contract power time.

**14.** A design method of a floor heating construction that uses heat accumulated in soil as a heat source for floor heating, the design method comprising:

installing a soil heat storage system in a foundation of the floor heating construction, where the soil heat storage system includes multiple heating bodies placed on surface of the soil to accumulate heat in the soil;

identifying requirement or non-requirement for electricity supply to the multiple heating bodies included in the soil heat storage system, based on a monitoring result of temperature of a building floor by a floor temperature sensor; and

controlling midnight power-based electricity supply to the multiple heating bodies based on an identification result of the requirement or non-requirement,

where the control of the midnight power-based electricity supply has a specific control mode that performs the midnight power-based electricity supply to the multiple heating bodies at a frequency of once two days, regardless of the monitoring result of the floor temperature sensor.

**15.** A design method of a floor heating construction that uses heat accumulated in soil as a heat source for floor heating, the design method comprising:

installing a soil heat storage system in a foundation of the floor heating construction, where the soil heat storage system includes multiple heating bodies placed on surface of the soil to accumulate heat in the soil; and

controlling electricity supply to the multiple heating bodies included in the soil heat storage system,

where an electricity supply state of the multiple heating bodies is controlled to vary a gross heating value of the multiple heating bodies, in response to a requirement for floor heating.

**Fig.1**

## Fig.2

153   154   152   151   t   210   150

GL

TO CONTROL DEVICE

106
100
104

102   101   102   D   103   102   105

Dh

EP 1 795 816 A1

# Fig.3

AREA GROSS HEATING VALUE[W/M²]

0

DISTANCE 'T' FROM
BUILDING FLOOR 'T'

# Fig.4

| t | k(t) |
|---|---|
| 0 | 1.0 |
| ~ 100 | 1.05 ~ 1.08 |
| ~ 200 | 1.10 ~ 1.13 |
| ~ 300 | 1.15 ~ 1.18 |
| 300 ~ | 1.18 ~ |

# Fig.5

START

S300
CURRENT TIME IS WITHIN CONTRACT POWER TIME OF MIDNIGHT POWER ? — N

Y

S310
MONITOR OUTPUT OF FLOOR TEMPERATURE SENSOR

S320
ELECTRICITY SUPPLY TO HEATING PANELS IS REQUIRED ? — N

Y

S350
STOP ELECTRICITY SUPPLY TO HEATING PANELS

S360
UPDATE AND STORE HEATER-OFF TIME

S370
HEATER-OFF TIME ENTERS SECOND DAY IN CONTRACT POWER TIME OF MIDNIGHT POWER ?

Y — N

S330
START ELECTRICITY SUPPLY TO HEATING PANELS

S340
RESET COUNT OF HEATER-OFF TIME

END

Fig.6

EP 1 795 816 A1

## Fig.7

212 — OUTSIDE AIR TEMPERATURE SENSOR

210 — FLOOR TEMPERATURE SENSOR

200

CONTROL DEVICE

GP

102

n1

190

T

102

n2

190

BS

102

n3

190

D1

102

n4

190

D2

102

n5

190

D3

102

n6

190

D4

102

n7

190

DK

102

n8

190

# Fig.8

## INTERNATIONAL SEARCH REPORT

| International application No. |
| --- |
| PCT/JP2005/013208 |

| A. CLASSIFICATION OF SUBJECT MATTER |
| --- |
| ***F24D11/00*** (2006.01), ***F24D15/02*** (2006.01) |

According to International Patent Classification (IPC) or to both national classification and IPC

| B. FIELDS SEARCHED |
| --- |
| Minimum documentation searched (classification system followed by classification symbols) |
| ***F24D11/00*** (2006.01), ***F24D15/02*** (2006.01) |

| Documentation searched other than minimum documentation to the extent that such documents are included in the fields searched |
| --- |
| Jitsuyo Shinan Koho      1922-1996    Jitsuyo Shinan Toroku Koho    1996-2005 |
| Kokai Jitsuyo Shinan Koho    1971-2005    Toroku Jitsuyo Shinan Koho    1994-2005 |

| Electronic data base consulted during the international search (name of data base and, where practicable, search terms used) |
| --- |
|  |

| C. DOCUMENTS CONSIDERED TO BE RELEVANT |
| --- |

| Category* | Citation of document, with indication, where appropriate, of the relevant passages | Relevant to claim No. |
| --- | --- | --- |
| Y | JP 3049536 B2 (Tetsuzo FUKUDA), 31 March, 2000 (31.03.00), All pages (Family: none) | 1-15 |
| Y | JP 53-45751 U (Mitsubishi Electric Corp.), 19 April, 1978 (19.04.78), All pages (Family: none) | 1-15 |
| Y | JP 2003-21349 A (Susumu KIYOKAWA), 24 January, 2003 (24.01.03), All pages (Family: none) | 1-15 |

☐ Further documents are listed in the continuation of Box C.      ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 31 October, 2005 (31.10.05) | 15 November, 2005 (15.11.05) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**EP 1 795 816 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3049536 B